Europäisches Patentamt

European Patent Office

Office européen des brevets

(11) Publication number: **0 038 473**
**B1**

(12) **EUROPEAN PATENT SPECIFICATION**

(45) Date of publication of patent specification: **23.03.88**

(21) Application number: **81102673.1**

(22) Date of filing: **09.04.81**

(51) Int. Cl.⁴: **C 08 G 69/16, C 08 J 5/00** // **D01F6/60**

(54) **Two-stage hydrolysis process for polymerization of nylon 6.**

(30) Priority: **21.04.80 US 141827**

(43) Date of publication of application:
**28.10.81 Bulletin 81/43**

(45) Publication of the grant of the patent:
**23.03.88 Bulletin 88/12**

(84) Designated Contracting States:
**DE FR GB IT**

(56) References cited:
**DE-C-1 218 110**
**GB-A-1 208 524**
**GB-A-1 406 459**
**US-A-3 458 482**

(73) Proprietor: **ALLIED CORPORATION**
**Columbia Road and Park Avenue P.O.. Box 2245R**
**(Law Dept.)**
**Morristown New Jersey 07960 (US)**

(72) Inventor: **Yates, Samuel Lee**
**1608 Sunnybrook Court**
**Columbia South Carolina 29210 (US)**
Inventor: **Cole, Charles Jayroe**
**1800 N. Woodstream**
**Columbia South Carolina 29210 (US)**
Inventor: **Wiesner, Albert Henderson**
**318 N. Stonehedge Drive**
**Columbia South Carolina 29210 (US)**
Inventor: **Wagner, John Walter**
**1952 West Chester Drive**
**Petersburg Virginia 23803 (US)**

(74) Representative: **Collier, Jeremy Austin Grey**
**et al**
**J.A.Kemp & Co. 14, South Square Gray's Inn**
**London WC1R 5EU (GB)**

Courier Press, Leamington Spa, England.

# 0 038 473

## Description

This invention relates to the production of polycaproamide shaped articles such as filaments, directly from freshly prepared (nascent) polymer. More particularly, the invention relates to an improvement in the first or hydrolysis step in the polymerization of epsilon-caprolactam, namely hydrolysing in two stages with different conditions in each stage.

Previous nascent, or polymerization directly coupled to spinning, processes, such as that described in US—A—3,813,366 and in US—A—3,578,640 produce shaped articles such as filaments (fiber) having higher water extractables content than similar articles (fiber) produced from polymer chips which were water washed and dried before being melted and shaped as by spinning. Particularly troublesome water extractable components to processors of shaped articles (fiber) are cyclic oligomers of caprolactam. Present directly coupled (nascent) processes produce fiber or other shaped articles having a cyclic dimer content of 0.5 to 0.7 percent by weight compared to fiber or shaped articles produced from washed, dried, and melted chips of about 0.1 percent by weight cyclic dimer content.

During the initial ring opening of the epsilon-caprolactam in the hydrolysis step, the opened ring is free to combine with other open rings thereby forming linear and cyclic oligomers. The cyclic dimer of caprolactam thus formed is very stable and has a low vapor pressure so is not removable from the coupled process. The presence of the cyclic dimer in the finished yarn product causes processing difficulties in the customer mill. The mill problems are associated with the cyclic dimer migrating to the surface of the yarn and depositing on the various yarn path components resulting in a situation where the mill process must be shut down to clean the surface as a result of poor yarn quality caused by improper surface frictional qualities which was, in turn, caused by the cyclic dimer buildup. This condition has been called "yarn shedding" and causes the customer downtime on machinery and a reduction of quality of product. Several methods are known to reduce the effect of the cyclic dimer, such as washing the yarn with water and then drying it, or applying a special overfinish to the yarn to enhance the frictional qualities and allow it to be processed. Both of these methods are expensive and, therefore, unattractive to the customer. Therefore, the only practical solution is to reduce the amount of cyclic dimer formed in the coupled polymerization process to a level low enough that its presence is not a factor in yarn quality. See also US—A—3,287,322 for a discussion of oligomers and their effects in yarn.

By water extractables is meant herein the components of the polycaprolactam shaped polymer article (fiber) which can be extracted with water by washing at a temperature of 100°C. for a period of thirty minutes. The components of water extraction are generally caprolactam, linear oligomers and cyclic oligomers of caprolactam.

By oligomer is meant herein a caprolactam compound having 2 to 4 repeating molecular units.

By polymer is meant herein a polycaprolactam having five or more repeating molecular units.

In GB—A—1406459 we described a continuous process for producing shaped articles of polycaproamide which comprises:

(a) continuously polymerising ε-caprolactam at an elevated temperature and pressure in the presence of water and a terminating agent to form a prepolymer melt;

(b) continuously removing most of the water and part of the unreacted ε-caprolactam from the prepolymer melt by vacuum flashing in the absence of extraneous steam;

(c) continuously polymerising the prepolymer from step (b) to form molten polycaproamide at a temperature of from 225° to 300°C, and an absolute pressure of 31 to 150 mm Hg (4,1kPa to 20 kPa) in the presence of steam at a partial pressure of at least 30 mm Hg (4 kPa) the contact between the prepolymer and the steam being such as (i) to provide a polycaproamide containing below 3.5% by weight of material extractable with water boiling at atmospheric pressure, (ii) to keep thermal degradation of the polymer within 3 units of the theoretical difference of ends and (iii) to cause the rate of viscosity increase of the prepolymer melt to level out at less than 10 FAV (formic acid relative viscosity) units per hour after less than 4 hours of operation;

(d) continuously extruding the molten polycaproamide to form shaped articles; and

(e) cooling the shaped articles.

The present invention provides a process for producing a polycaproamide shaped article from molten anhydrous nascent polymer, which comprises (a) continuously hydrolyzing epsilon-caprolactam at an elevated temperature and pressure in the presence of a small amount of water to form a prepolymer melt, (b) continuously removing most of the water and part of the unreacted caprolactam from the prepolymer melt, (c) continuously polymerising the prepolymer from step (b) to provide a polycaproamide melt, (d) continuously extruding the polycaproamide melt to form a uniformly shaped article and (e) cooling the shaped article, characterised in that the cyclic dimer content is reduced to below 0.2 percent by weight by carrying out the hydrolysis step (a) in two stages, (i) by continuously hydrolysing caprolactam in a first stage vessel in the presence of a small amount of water at a temperature of 180°C to 260°C, preferably 200 to 230°C and a pressure of 138 to 1034 kPa gauge (20 to 150 psig), preferably 345 to 552 kPa (50 to 80 psig), for 0.5 to 4 hours, preferably 1.5 to 3 hours, and then, before an equilibrium caprolactam conversion is reached, (ii) by continuously passing the reaction mixture from the first stage vessel to a second stage vessel and heating it therein at a temperature of 200°C to 260°C, preferably 210 to 240°C, and a pressure of 13 to 120 kPa absolute (100 to 900 Torr), preferably 53 to 80 kPa absolute (400 to 600 Torr) for 2 to 15 hours, preferably 6 to 10 hours, while continuously removing unreacted caprolactam and most of the water from the second stage vessel and in that most of the unreacted caprolactam in the prepolymer melt is removed therefrom in step (b).

Another embodiment of this invention comprises the above two-stage hydrolyzation process wherein the unreacted caprolactam removed from the second stage vessel is separated from the water and returned to the second stage vessel.

The process of this invention provides effluent from the first stage comprising 10 to 80 percent polymer, preferably 30 to 50 percent polymer, 20 to 90 percent, preferably 50 to 70 percent, caprolactam and 0.7 percent water, and an effluent from the second stage comprising 60 to 90 percent polymer and 10 to 40 percent caprolactam.

In the process of GB—A—1406459 most of the water and part of the unreacted epsilon-caprolactam was removed from the prepolymer melt in step (b) by exposure to vacuum in a vessel providing the prepolymer melt with large surface area-to-volume ratio, and then in step (c) the melt was continuously transferred to a surface renewal device also having large surface area-to-volume ratio, which promoted completion of the polymerization reaction by polycondensation and which removed residual amounts of vaporizable materials, at a temperature between 225°C and 300°C., and a residence time of more than one hour. Step (b) has a residence time of 2 to 20 minutes.

The second stage (a)(ii) of the two-stage hydrolysis process of this invention can be carried out in a vertical multistage hydrolyzer reactor with baffles between each stage to achieve a plug flow effect along the reactor. Also, the first stage (a)(i) of the two-stage hydrolysis of the process of the invention can be carried out in an agitated vessel. The prepolymer formed at step (a) by the process of this invention has a molecular weight of 2,000 to 14,000, preferably 7,000 to 9,000.

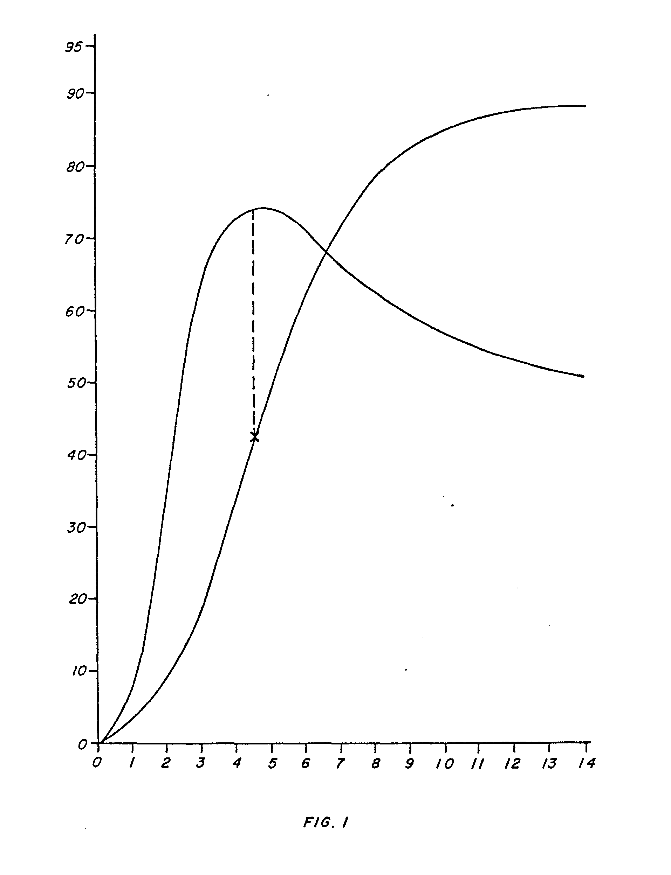

The conversion of caprolactam to prepolymer is an autocatalytic reaction in which there are actually two main reactions taking place. These reactions are hydrolysis where water reacts with caprolactam to form a linear oligomer, and addition where linear oligomers react with caprolactam to form higher molecular weight linear species (including polymer). When a feed of caprolactam and water is heated to reaction temperatures, the initial rate of conversion is slow due to only the hydrolysis reaction taking place. This period of slow initial conversion is sometimes referred to as the induction period. However, as the concentration of linear oligomers increases due to the hydrolysis reaction, the addition reaction begins to occur and the total rate of conversion increases. The conversion rate will reach a maximum at 25—45 percent conversion, after which the conversion rate will diminish as the caprolactam is deplected. Typical conversion curves are shown in Figure 1. Conversion percent at maximum total ends is shown by the "X". To carry out this type of nonequilibrium condition reaction(s) in a continuous reactor system at a rate near the maximum (and to obtain high yield), the preferred system would consist of a stirred-tank reactor followed by a plug flow reactor. This is because, with efficient mixing, the feed entering the stirred-tank reactor would immediately assume the same composition as the mixture in the tank which can be adjusted by residence time to approach the maximum reaction rate (slope of conversion rate curve Figure 1), never reaching equilibrium conditions. The plug flow reactor would then complete the conversion while sustaning the high rate as long as possible and maximizing the yield.

In the preferred process of this invention, the first reactor preferably will be a well agitated tank reactor to be operated at less than 50 percent conversion. The second reactor preferably will be a staged reactor to approximate a tubular or plug flow reactor.

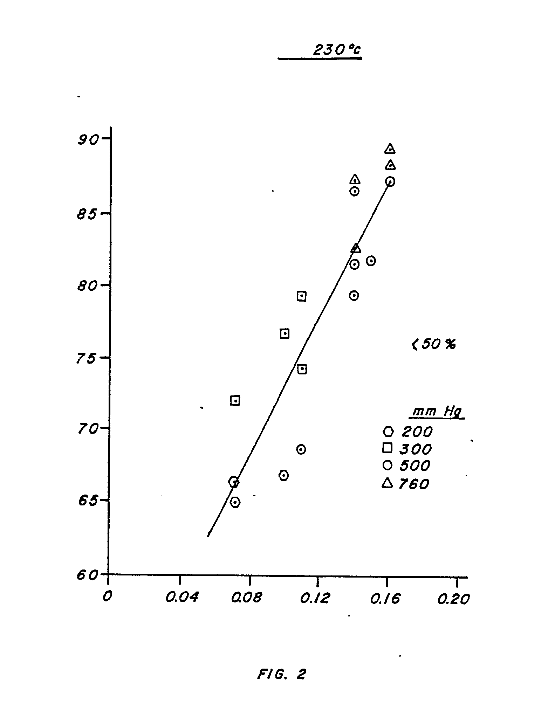

Figure 2 shows the relationship of percent conversion of lactam in the two-stage hydrolysis process of this invention to percent by weight of cyclic dimer in the yarn product. Cyclic dimer content of nylon 6 can be determined by the analysis of the following references:

1. D. Heikens, *Recueil, 75,* 1119 (1956).
2. S. Mori & T. Takeuchi, *Chrom. 49,* 230 (1970).

Note that although less than 0.2 percent by weight cyclic dimer can be achieved at 90 percent conversion with the two-stage hydrolysis process of this invention, to accomplish the preferred less than 0.1 percent by weight cyclic dimer, conversion would be less than 75 percent. Economics, namely, the cost of removing and recycling unreacted monomer, dictates at least a 60 percent conversion rate for this two-stage hydrolysis process. Note that the first stage preferred conversion is less than 50 percent. The preferred operating conditions are as follows:

|  | First stage | Second stage |
|---|---|---|
| Temperature, °C | 230 | 230 |
| Pressure | 60 psig(414 kPa) | As shown in Figure 2 |
| Residence Time, Hrs. | 2 | 6 to 11 |
| Flow | Agitated | Plug |

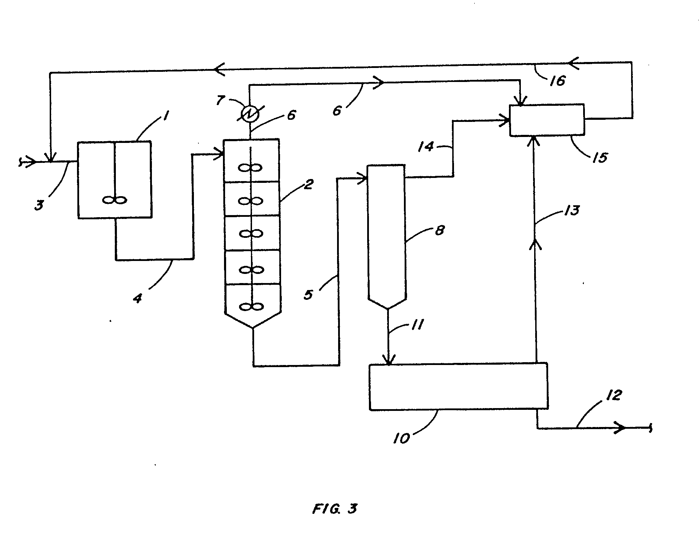

Figure 3 is a schematic representation of the apparatus used in the process of this invention, described below.

0 038 473

Figure 3 shows the two-stage hydrolysis process of this invention. Caprolactam, water and additives are fed into a first-stage agitated vessel 1 through line 3. The first stage or initiation reaction takes place at a temperature of 180°C to 260'C, preferably 200'C to 230'C, at a pressure of 20 to 150 psig. (138—1034 kPa), preferably 50 to 80 psig. (345—552 kPa), for a period of 1.5 to 3 hours.

Effluent from the first stage vessel 1 enters the second stage vertical, multistage, baffled, plug-flow vessel 2 through line 4. This effluent preferably comprises 30 to 50 percent by weight polymer, 50 to 70 percent by weight caprolactam and about 0.7 percent by weight water. This effluent undergoes polyaddition and some further hydrolysis in the second stage vessel 2 under a vacuum of 100 to 900 Torr (13—120 kPa, absolute) preferably from 400 to 600 Torr (53—80 kPa, absolute) and at a temperature of 200°C to 260°C, preferably 210°C to 240°C, for 2 to 15 hours, preferably 6 to 10 hours, while most of the water is withdrawn through vacuum line 6. Some caprolactam is vaporized and condensed by condenser 7 and returned to second stage vessel 2 by gravity flow through vacuum line 6. From second stage vessel 2, effluent flows through line 5. This effluent is a prepolymer comprising 60—90 percent by weight polymer and 10—40 percent by weight caprolactam. The polymer in the effluent from the second stage vessel 2 is of significantly higher average molecular weight than the polymer in the effluent from the first stage vessel 1.

Figure 3 shows the two-stage hydrolysis of this invention in place, items 1 to 7, directly coupled to a prior art direct spinning of molten polymer, polymerization process. The prepolymer and caprolactam then undergo further polymerization downstream in the vessels of the prior art, 8 and 10. Prepolymer from line 5 flows into evaporator vessel 8 in which step (b) of the process is carried out. Vessel 8 is a vessel providing a large surface area-to-volume ratio to facilitate removal under vacuum of the water remaining, some of the water extractables and most of the caprolactam. This vessel is under high vacuum of 5—30 mm.Hg (667—4000 Pa, absolute) at a temperature of 240°C—260°C. Residence time in vessel 8 is short, less than one hour, preferably from 2 to 20 minutes. The volatiles described above are removed through vacuum line 14, into vacuum system 15. Molten polymer effluent flows through line 11 into finisher 10 in which step (c) of the process is carried out. Finisher 10 is a surface renewal device also having a large surface area-to-volume ratio and promotes completion of the polymerization reaction by polycondensation. Finisher 10 also removes residual amounts of volatiles through vacuum line 13 to vacuum system 15. Finisher 10 operates at a temperature of between 225°C and 300°C and a residence time of more than one hour. Finished molten nylon 6 polymer then flows through line 12 to spinning without being solidified or further treatment. Caprolactam recovered in vacuum system 15 is recycled back to vessel 1 through line 16. Yarn from spinning is useful for face fiber in carpets, rugs and upholstery.

**Claims**

1. A process for producing a polycaproamide shaped article from molten anhydrous nascent polymer, which comprises (a) continuously hydrolyzing epsilon-caprolactam at an elevated temperature and pressure in the presence of a small amount of water to form a prepolymer melt, (b) continuously removing most of the water and part of the unreacted caprolactam from the prepolymer melt, (c) continuously polymerising the prepolymer from step (b) to provide a polycaproamide melt, (d) continously extruding the polycaproamide melt to form a uniformly shaped article and (e) cooling the shaped article, characterised in that the cyclic dimer content is reduced to below 0.2 percent by weight by carrying out the hydrolysis step (a) in two stages, (i) by continuously hydrolysing caprolactam in a first stage vessel in the presence of a small amount of water at a temperature of 180°C to 260°C and a pressure of 138 to 1034 kPa gauge (20 to 150 psig) for 0.5 to 4 hours and then, before an equilibrium caprolactam conversion is reached, (ii) by continuously passing the reaction mixture from the first stage vessel to a second stage vessel and heating it therein at a temperature of 200°C to 260°C and a pressure of 13 to 120 kPa absolute (100 to 900 Torr) for 2 to 15 hours while continuously removing unreacted caprolactam and most of the water from the second stage vessel and in that most of the unreacted caprolactam in the prepolymer melt is removed therefrom in step (b).

2. A process according to claim 1 wherein stage (i) is conducted at a temperature of 200°C to 230°C and a pressure of 345 to 552 kPa gauge (50 to 80 psig) for 1.5 to 3 hours and stage (ii) is conducted at a temperature of 210°C to 240°C and a pressure of 53 to 80 kPa absolute (400 to 600 Torr) for 6 to 10 hours.

3. A process according to claim 1 or 2 wherein the unreacted caprolactam removed from the second stage vessel is separated from the water and returned to the second stage vessel.

4. A process according to claim 1, 2 or 3 wherein the first stage vessel is an agitated reactor.

5. A process according to claim 4 wherein the first stage vessel is operated at less than 50 percent conversion.

6. A process according to claim 4 or 5 wherein the second stage vessel is a vertical, multistage hydrolyser reactor with baffles between each stage to achieve a plug flow effect of reaction mixture along the length of the reactor.

7. A process according to any one of the preceding claims wherein the second stage vessel is operated at 60 to 90 percent conversion.

8. A process according to any one of the preceding claims wherein the molecular weight of the prepolymer in the prepolymer melt from the second stage vessel is 7000 to 9000.

9. A process according to any one of the preceding claims wherein step (b) is carried out in an

4

## 0 038 473

evaporator vessel at a pressure of 667 to 4000 Pa absolute (5 to 30 mm Hg) and a temperature of 240°C to 260°C for 2 to 20 minutes.

10. A process according to any one of the preceding claims wherein step (c) is carried out in a surface renewal device at a temperature of between 225°C and 300°C with a residence time of more than 1 hour.

### Patentansprüche

1. Verfahren zur Herstellung eines Polycaproamidformlings aus geschmolzenem wasserfreiem naszierendem Polymer, bei dem man (a) kontinuierlich epsilon-Caprolactam bei erhöhter Tempreatur und erhöhtem Druck in Gegenwart einer kleinen Wassermenge unter Bildung einer Vorpolymerschmelze hydrolysiert, (b) kontinuierlich das meiste Wasser und einen Teil des unumgesetzten Caprolactams aus der Vorpolymerschmelze entfernt, (c) kontinuierlich das Vorpolymer aus der Stufe (b) unter Bildung einer Polycaproamidschmelze polymerisiert, (d) kontinuierlich die Polycaproamidschmelze unter Bildung eines gleichmäßigen Formlings extrudiert und (e) den Formling kühlt, dadurch gekennzeichnet, daß man den Gehalt an zyklischem Dimeren unter 0,2 Gew.-% herabsetzt, indem man die Hydrolysestufe (a) in zwei Stufen durchführt, wobei man (i) kontinuierlich Caprolactam in einem Behälter der ersten Stufe in Gegenwart einer kleinen Wassermenge bei einer Temperatur von 180°C bis 260°C und bei einem Druck von 138 bis 1034 kPa Überdruck (20 bis 150 psig), 0,5 bis 4 h hydrolysiert und dann, bevor eine Caprolactamgleichgewichtsumwandlung erreicht ist, (ii) kontinuierlich das Reaktionsgemisch aus dem Behälter der ersten Stufe zu einem Behälter der zweiten Stufe überführt und es darin auf eine Temperatur von 200°C bis 260°C und bei einem Druck von 13 bis 120 kPa absolut (100 bis 900 Torr) während 2 bis 15 h erhitzt, während kontinuierlich unumgesetztes Caprolactam und das mesite Wasser aus dem Behälter der zweiten Stufe entfernt werden, und daß man das meiste unumgesetzte Caprolactam in der Vorpolymerschmelze in der Stufe (b) daraus entfernt.

2. Verfahren nach Anspruch 1, bei dem die Stufe (i) bei einer Temperatur von 200°C bis 230°C und bei einem Druck von 345 bis 552 kPa überdruck (50 bis 80 psig) während 1,5 bis 3 h durchgeführt wird und die Stufe (ii) bei einer Temperatur von 210°C bis 240°C und bei einem Druck von 53 bis 80 kPa absolut (400 bis 600 Torr) während 6 bis 10 h durchgeführt wird.

3. Verfahren nach Anspruch 1 oder 2, bei dem das aus dem Behälter der zweiten Stufe entfernte unumgesetzte Caprolactam von dem Wasser abgetrennt und zu dem Behälter der zweiten Stufe zurückgeführt wird.

4. Verfahren nach Anspruch 1, 2, oder 3, bei dem der Behälter der ersten Stufe eine gerührter Reaktor ist.

5. Verfahren nach Anspruch 4, bei- dem der Behälter der ersten Stufe mit weniger als 50 % Umwandlung betrieben wird.

6. Verfahren nach Anspruch 4 oder 5, bei dem der Behälter der zweiten Stufe ein vertikaler mehrstufiger Hydrolysereaktor mit Prallwänden zwischen jeder Stufe ist, um den Effekt einer idealen Strömung des Reaktionsgemisches entlang der Länge des Reaktors zu bekommen.

7. Verfahren nach einem der vorausgehenden Ansprüche, bei dem der Behälter der zweiten Stufe mit 60 bis 90 % Umwandlung betrieben wird.

8. Verfahren nach einem der vorausgehenden Ansprüche, bei dem das Molekulargewicht des Vorpolymers in der Vorpolymerschmelze aus dem Behälter der zweiten Stufe 7000 bis 9000 ist.

9. Verfahren nach einem der vorausgehenden Ansprüche, bei dem die Stufe (b) in einem Verdampferbehälter bei einem Druck von 667 bis 4000 Pa absolut (5 bis 30 mm Hg) und bei einer Temperatur von 240°C bis 260°C während 2 bis 20 min durchgeführt wird.

10. Verfahren nach einem der vorausgehenden Ansprüche, bei dem die Stufe (c) in einer Oberflächenerneuerungseinrichtung bei einer Temperatur zwischen 225°C und 300°C mit einer Verweilzeit von mehr als 1 h durchgeführt wird.

### Revendications

1. Un procédé de production d'un article de polycaproamide conformé à partir de polymère fondu anhydre naissant, qui comprend les étapes suivantes: (a) hydrolyser en continu l'epsilon-carpolactame à une température et à une pression élevées en présence d'une petite quantité d'eau pour former une masse fondu de prépolymère (b) éliminer en continu la plus grande partie de l'eau et une partie du caprolactame non réagi de la masse fondue de prépolymère (c) polymériser en continu le prèpolymère provenant de l'étape (b) pour fournir une masse fondue de polycaproamide (d) extruder en continu la masse fondue de polycaproamide pour former un article conformé de manière uniforme et (e) refroidir l'article conformée, caractérisé en ce que la teneur en dimère cyclique est diminuée à moins de 0,2 pour cent en poids en effectuant l'étape d'hydrolyse (a) en deux stades, (i) par hydrolyse du caprolactame en continu dans un récipient de premier stade en présence d'une petite quantité d'eau à une température de 180°C à 260°C et à une pression de 138 à 1034 kPa au manomètre (20 à 150 psig) pendant 0,5 à 4 heures et ensuite, avant d'atteindre une conversion du caprolactame à l'équilibre, (ii) par passage en continu du mélange réactionnel du récipient du premier stade dans un récipient de deuxième stade et par chauffage à l'intérieur de celui-ci à une température de 200°C à 260°C et à une pression de 13 à 120 kPa, absolue (100 à 900 Torrs)

5

pendant 2 à 5 heures, tout en éliminant en continu le caprolactame non réagi et la plus grande partie de l'eau du récipient du deuxième stade, et en ce que la plus grande partie du caprolactame non réagi dans la masse fondue du prépolymère est éliminée de celle-ci à l'étape (b).

2. Un procédé selon la revendication 1 dans lequel on effectue le stade (i) à une température de 200°C à 230°C et à une pression de 345 à 552 kPa au manomère (50 à 80 psig) pendant 1,5 à 3 heures et l'on effectue le stade (ii) à une température de 210°C à 240°C et à une pression de 53 à 80 kPa absolue (400 à 600 Torrs) pendant 6 à 10 heures.

3. Un procédé selon la revendication 1 ou 2 dans lequel le caprolactame non réagi, retiré du récipient du deuxième stade est séparé de l'eau et renvoyé dans le récipient de deuxième stade.

4. Un procédé selon la revendication 1, 2 ou 3, dans lequel le récipient de premier stade est un réacteur agité.

5. Un procédé selon la revendication 4 dans lequel on fait fonctionner le récipient de premier stade à moins de 50 pour cent de conversion.

6. Un procédé selon la revendication 4 ou 5 dans lequel le récipient de deuxième stade est un réacteur hydrolyseur, vertical, multi-étages, avec des chicanes entre tous les étages pour réaliser un effect d'écoulement idéal du mélange réactionnel sur toute la longueur du réacteur.

7. Un procédé selon l'une quelconque des revendications précédentes dans lequel on fait fonctionner le récipient de deuxième stade à 60 à 90 pour cent de conversion.

8. Un procédé selon l'une quelconque des revendications précédentes dans lequel le poids moléculaire du polymère dans la masse fondue de prépolymère provenant du récipient de deuxième stade est de 7000 à 9000.

9. Un procédé selon l'une quelconque des revendications précédentes dans lequel on effectue l'étape (b) dans un récipient évaporateur à une pression de 667 à 4000 Pa absolus (5 à 30 mm de Hg) et à une température de 240°C à 260°C pendant 2 à 20 minutes.

10. Un procédé selon l'une quelconque des revendications précédentes dans lequel on effectue l'étape (c) dans un dispositif à renouvellement de surface à une température comprise entre 225°C et 300°C avec un temps de résidence de plus d'une heure.

*FIG. 1*

FIG. 2

FIG. 3